Europäisches Patentamt

European Patent Office

Office européen des brevets

(19)

(11) Publication number: 0 310 368
A2

# (12) EUROPEAN PATENT APPLICATION

(21) Application number: 88309010.2

(22) Date of filing: 29.09.88

(51) Int. Cl.⁴: **G 06 F 15/44**
**A 63 F 9/22**

(30) Priority: 29.09.87 ZA 877319

(43) Date of publication of application:
05.04.89 Bulletin 89/14

(84) Designated Contracting States:
AT BE CH DE ES FR GB GR IT LI LU NL SE

(71) Applicant: INTERVISION (PROPRIETARY) LIMITED
Suite 117 1st Floor Entrance 1 Sanlam Arena 10 Craddock
Avenue
Rosebank Johannesburg Transvaal Province (ZA)

(72) Inventor: Daffy, Michael Andrew
39 Fifth Avenue
Illovo Sandton (ZA)

Hart, Grant Errol
8 Boerbok Street
Brankenhurst Ext. Alberton (ZA)

(74) Representative: Crawford, Andrew Birkby et al
A.A. THORNTON & CO. Northumberland House 303-306
High Holborn
London WC1V 7LE (GB)

(54) Equipment and a method for entertaining people.

(57) Equipment for entertaining people has a computer (12) which generates pictures and supplies these to a composite TV signal generator (20) that provides a composite TV signal to a transmitter (24) for transmittion to receivers (28). An announcer monitors the computer generated pictures on a monitor (18) and supplies audible messages via a microphone (22). In response to the audio-visual material supplies by his receiver, the viewer contacts the announcer via a telephone system (30,32,34) and the announcer enters data supplied by the viewer into the computer via a mouse (14) and a keyboard (16).

EP 0 310 368 A2

**Description**

## EQUIPMENT AND A METHOD FOR ENTERTAINING PEOPLE

THIS INVENTION relates to equipment and to a method for entertaining people.

According to the invention there is provided entertainment equipment for entertaining people, which includes
a computer that is suitably programmed to generate visual base formats;
an audio signal generating means for generating an audio component;
a transmitting means for transmitting signals representative of the base formats and the audio component to an apparatus able to provide audio-visual stimuli to be seen and heard by a viewer;
a telephone facility whereby the viewer can contact an operator and supply the operator with interactive data; and
a data input means for entering the data supplied by the viewer into the computer, operable by the operator.

Further, according to the invention there is provided a method of entertaining people which includes
generating visual base formats by means of suitably programmed computer;
generating an audio component;
transmitting signals representative of the base formats and the audio component to an apparatus able to provide audio-visual stimuli to be seen and heard by a viewer;
receiving interactive data from the viewer by means of a telephone facility; and
entering the data supplied by the viewer into the computer, by an operator.

The base format may be a picture, pattern, grid or matrix. In one particular form, the base format may be for a game although it is emphasised that the invention is directed generally to the entertaining of people.

The equipment may include a TV signal generating unit for generating a composite TV colour signal in accordance with the base format supplied by the computer and the audio component supplied by the audio signal generating means. The transmitting means may then be a TV transmitter. The TV signals may be broadcast, in which case the equipment does not include TV receivers. Alternatively, a cable system may be utilised in which case the equipment may extend also to the receivers.

It will be appreciated, that if the TV signals are broadcast, a public telephone facility will be utilised. However, if a cable system is utilised the equipment could be used in a particular building or complex, such as a resort hotel, in which case the telephone facility could be a private facility. In this case, the equipment may also extend to a private exchange and the telephone handsets associated therewith, there being one handset located at the computer and with further handsets being located and associated with each receiving apparatus.

It will be appreciated further that it will be advantageous for the operator to see the base formats being generated by the computer and the equipment may accordingly include a monitor connected to the computer whereby the operator may monitor the base formats generated by the computer. The operator may further act as an announcer, such that he provides messages to the viewers, and the audio-signal generating means may accordingly include a microphone.

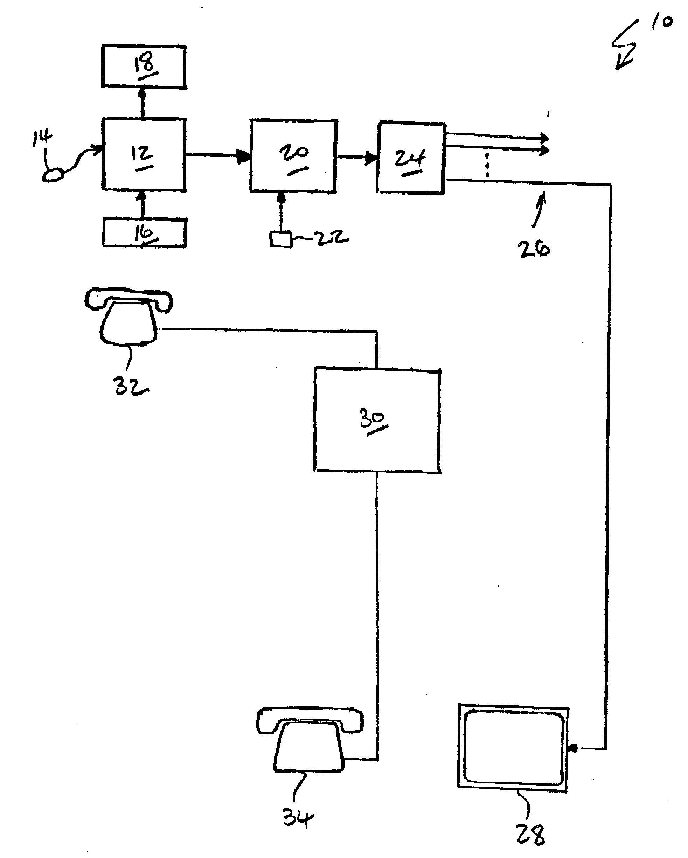

The invention is now described, by way of an example, with reference to the accompanying drawing, which shows entertainment equipment in accordance with the invention.

Referring to the drawing, the equipment is designated generally by reference numeral 10. The equipment 10 is intended for use in a building or complex, such as a holiday resort.

The equipment 10 comprises a computer 12 which is suitably programmed and which is connected to a "mouse" 14 and a keyboard 16 means of which data may be entered into the computer 12. The computer 12 generates base formats as discussed above and supplies these to a monitor 18 and a composite TV signal generator 20. Audio messages are supplied to the generator 20 by means of microphone 22. The computer 12, mouse 14, keyboard 16, monitor 18 and the microphone 22 are located in a suitable studio. The TV signal generator 20 supplies signals to a transmitter 24 which transmits these signals via a cable system 26 to a number of TV receivers 28, one of which is shown. The receivers 28 are located in various rooms of the resort.

The equipment 10 further includes a private telephone exchange 30 which is connected to a handset 32 and a number of handsets 34. The handset 32 is in the studio and the handsets 34 are in the various rooms.

It will be appreciated, as discussed above, that the transmitter 24 could transmit its signals in a broadcast manner, to be received by suitable receivers with the appropriate antennas. With such a broadcast system, there will be a telephone handset such as handset 32 in the studio, but this handset will be connected to a public telephone system, which provides the telephone handsets that will be found in the various homes in which the receivers are located. With such an arrangement, the equipment will not include the receivers and the telephone system.

In a preferred form, the computer 12 is a personal computer known by the trade mark "AMIGA 2000" which utilises a single 20MEG hard-disk drive. Similarly, the generator 20 may be a "NERICKI PRO GENLOCK" generator. The generator 20 will supply a composite signal that will be in NTSC, PAL or SECAM as appropriate.

It will be understood that the computer 12 generates base formats and an announcer supplies messages which are transmitted to the receivers. Viewers then contact the announcer via the telephones 34 and 32, in response to the audio-visual material being supplied to interact with this material.

Thus, the computer 12 could generate part of a picture, with the picture being drawn further in response to instructions supplied by the viewers. It will be appreciated that viewers can be entertained by the equipment and method of the invention in any number of ways. A further way in which viewers may be entertained, is by playing a game. Such a game can be similar to Bingo, in which case a grid will be generated and a person wishing to play will reproduce the grid, as shown on his television receiver on a piece of paper and enter a series of numbers that is independently verifiable, in a predetermined manner, in the grid elements. This series may, for example, be the telephone number of the handset 34. The computer 12 will then randomly select a group of grid elements and a number and the group of elements and the number will be transmitted to the viewers. The first viewer to have a line of numbers that is the same as that generated by the computer 12 is a winner. This viewer will then contact the announcer by means of the telephones 34 and 32 and supply his telephone number. This telephone number is then entered into the computer 12 by means of the keyboard 16 and the computer then verifies that the particular viewer has indeed won. Similarly, the game may be in the nature of a crossword puzzle, noughts and crosses (also known as "tic-tac-toe") and other known games.

In regard to the game referred to above similar to Bingo, the computer program may include the following procedures:-

1. Draw a blank grid having eight rows and seven columns, display this grid on the monitor 18 and supply it to the generator 20 to be transmitted.

2. Allow the announcer to blank out certain elements by means of the mouse 14, display the grid with the blanked out squares on the monitor 18 and supply the grid with the blanked out squares to the generator 20 to be transmitted.

3. Allow the announcer to select a starting element in the grid, display this element on the monitor 18 and supply it to the generator 20 to be transmitted.

4. Randomly select a row and a number between zero and nine, display the row and number on the monitor 18 and supply same to the generator 20 to be transmitted.

5. Repeat the previous step until interrupted by the announcer and accept a number supplied by the announcer.

6. Verify whether the number supplied by the announcer is a winning number and if so enter the winning number in the grid, display the grid and the winning number on the monitor 18 and supply same also to the generator 20 to be transmitted to the viewers and then end the game. If not, supply a suitable message to the announcer via the monitor 18 and to the viewers via the generator 20 and carry on the random selection of a row and a number.

By means of the invention, a large number of dispersed viewers may be entertained in a cheap manner, with most of the equipment required being existing equipment.

## Claims

1. Entertainment equipment for entertaining people, which includes
a computer that is suitably programmed to generate visual base formats;
an audio signal generating means for generating an audio component;
a transmitting means for transmitting signals representative of the base formats and the audio component to an apparatus able to provide audio-visual stimuli to be seen and heard by a viewer;
a telephone facility whereby the viewer can contact an operator and supply the operator with interactive data; and
a data input means for entering the data supplied by the viewer into the computer, operable by the operator.

2. The equipment claimed in Claim 1, which includes a TV signal generating unit for generating a composite TV colour signal in accordance with the base formats supplied by the computer and the audio component supplied by the audio signal generating means and in which the transitting means is a TV transmitter.

3. The equipment claimed in Claim 2, in which the transmitting means utilises cables and which includes receiving apparatus connected to the transmitting means by the cables.

4. The equipment claimed in Claim 3, which includes a telephone exchange, a telephone handset located at the computer and a number of further handsets there being with each receiving apparatus and with all the handsets being connected to the exchange.

5. The equipment claimed in Claim 1, which includes a monitor connected to the computer whereby the operator may monitor the base formats generated by the computer.

6. The equipment claimed in Claim 1, in which the audio signal generating means includes a microphone such that the operator may provide messages.

7. A method of entertaining people which includes generating visual base formats by means of a suitably programmed computer.
generating an audio component
transmitting signals representative of the base formats and the audio component to an apparatus able to provide audio-visual stimuli to be seen and heard by a viewer;
receiving interactive data from the viewer by means of a telephone facility; and
entering the data supplied by the viewer into the computer, by an operator,

8. The method claimed in Claim 7, in which composite TV colour signals are generated and broadcast.

9. The method claimed in Claim 7, in which composite TV colour signals are generated and diffused via cables to receiving apparatus.

10. The method claimed in Claim 7, in which the operator monitors the base formats generated by the computer.

11. The method claimed in Claim 7, in which the operator generates at least part of the audio component.